# EUROPEAN PATENT APPLICATION

(11) **EP 2 546 195 A1**
(43) Date of publication of application: **16.01.2013**
(21) Application number: 11753425.5
(22) Date of filing: 10.03.2011
(51) Int. Cl.: C01B 33/023, C01B 33/025

(54) **METHOD FOR RECOVERING SILICON AND METHOD FOR PRODUCING SILICON**

(30) Priority: 11.03.2010 JP 2010054741
(71) Applicant: Mitsubishi Chemical Corporation, Chiyoda-ku Tokyo 100-8251 (JP)
(72) Inventor: YAMAHARA Keiji, Kanagawa 227-8502 (JP); KATAYAMA Toshiaki, Kanagawa 227-8502 (JP); HASHIGUCHI Tadashi, Kagawa 762-8510 (JP); SHIRAHAMA Toshiki, Fukuoka 806-0021 (JP); SAWAI Takeshi, Fukuoka 806-0004 (JP)
(74) Representative: Vossius & Partner
(86) International application number: PCT/JP2011/055600
(87) International publication number: WO 2011/111767

(57) **Abstract**

A method for recovering or producing silicon, that can recover or produce silicon using cutting scraps containing silicon carbide abrasive grains and silicon as raw materials without separating those is provided. The present invention is a method for recovering or producing silicon from cutting scraps containing silicon carbide, which are produced during a cutting or grinding of silicon ingots or silicon wafers, wherein the method comprises producing silicon by heating the cutting scraps containing silicon carbide, and a silica raw material.

## Description

### Technical Field

The present invention relates to a method for recovering silicon and a method for producing silicon. More particularly, it relates to a method for recovering silicon from cutting scraps produced during the cutting or grinding of silicon ingots or silicon wafers, and a method for producing silicon from the cutting scraps and a silica raw material.

### Background Art

Solar cells have the advantages that carbon dioxide emissions per electric generating capacity are small and a fuel for electric generation is not required, and its demand is recently increasing. Of solar cells that are currently put to practical use, a single bond solar cell having a pair of P-N bonds, using monocrystal silicon or polycrystal silicon becomes mainstream, and demand of silicon is increased with increasing demand of solar cells. Silicon used in solar cells is required to have high purity in order to improve cell efficiency.

Many silicon wafers for solar cells are produced by slicing silicon ingots using a multi-wire saw. To produce solar cells at low costs, the silicon wafer is required to slice thin as possible. For example, in the case of preparing a silicon wafer having a thickness of 200 µm by slicing, a multi-wire saw having a diameter comparable to that of the wafer is used. For this reason, silicon in an amount comparable to the amount of silicon wafers produced has been scrapped in a form of a mixture with silicon carbide that is abrasive grains.

Because a mixture (cutting scraps) of silicon and silicon carbide, produced during the slicing of the silicon ingots contains high purity silicon, the silicon has been required to be recovered by separation and then recycled. However, because silicon and silicon carbide, produced during cutting are particles of 10 µm or less, separation by filtering is difficult. Furthermore, because densities of those are close, separation utilizing density difference is difficult.

On the other hand, where silicon carbide remains in silicon ingots, the silicon carbide induces cutting of a wire saw during slicing the silicon ingots, and adversely affects the performance of a silicon wafer. Therefore, silicon carbide has been required to be strictly separated.

Patent Document 1 describes a slurry regeneration method comprising (1) subjecting slurry comprising an aqueous dispersion medium having mixed therein abrasive grains and silicon grains to primary centrifugal separation to recover a solid matter mainly comprising the abrasive grains as a main component, (2) subjecting a liquid part obtained by the primary centrifugal separation to secondary centrifugal separation to separate into a liquid part comprising the dispersion medium as a main component and residual sludge, (3) diluting the sludge with an aqueous medium and then recovering a solid matter by tertiary centrifugal separation, and (4) utilizing the solid matter together with the solid matter comprising the abrasive grains as a main component, as regenerated abrasive grains.

Patent Document 2 describes a method for recovering silicon carbide by heating a mixture containing silicon carbide particles and silicon particles at a first temperature to melt the silicon particles, holding a melt containing molten silicon obtained at a second temperature, and dipping a takeoff jig in the upper part of the melt.

### Prior Art Documents

### Patent Document

Patent Document 1: JP-A 2005-313030
Patent Document 2: JP-A 2007-302513

### Summary of the Invention

### Problems that the Invention is to Solve

However, the method described in Patent Document 1 is a method for regenerating abrasive grains that are silicon carbide, and does not disclose regeneration of silicon. It is unclear whether or not high purity silicon can be recycled by the method. Furthermore, the regeneration method of silicon carbide abrasive grains described in Patent Document 1 involves complicated works, and it is therefore difficult to say that the method is an efficient method. The method described in Patent Document 2 is that recovery work of silicon carbide is complicated. Therefore, it is difficult to say that the method is an efficient recycling method of silicon.

Any of the methods is a method of separating and recovering silicon carbide abrasive grains and silicon. However, from the standpoint of maximally recycling high purity silicon, a method of recycling silicon from both silicon carbide abrasive grains and silicon is desired.

Furthermore, because density difference between silicon carbide and silicon is small, there is a problem that those cannot efficiently be separated to each other.

Accordingly, the present invention has an object to provide a method of recovering silicon, that can recover silicon using cutting scraps containing silicon carbide abrasive grains as raw materials without separating silicon carbide and silicon, and a method for producing silicon from cutting scraps containing the silicon carbide abrasive grains, and a silica raw material.

### Means for Solving the Problems

The present inventors have found the following points by making close studies on the above problem, and have completed the present invention.
(1) Silicon can be recovered from cutting scraps by heating cutting scraps containing silicon carbide, which are produced during a cutting or grinding of silicon ingots or silicon wafers, and a silica raw material.
(2) Silicon is more preferably recovered by mixing a silica raw material with cutting scraps containing silicon carbide to form a raw material mixed powder, and heating the raw material mixed powder.
(3) Silicon is more preferably recovered by forming the raw material mixed powder into a briquette, and heating the briquette of raw material mixed powder.
(4) High purity silicon can be recovered by decreasing a concentration of impurities in cutting scraps containing silicon carbide that are raw materials. Furthermore, higher purity silicon can be recovered by combining a silica raw material having low concentration of impurities with cutting scraps having low concentration of impurities.
(5) Treatment of removing impurities in cutting scraps are conducted to decrease a silicon concentration, and highly purified cutting scraps having relatively high concentration of silicon carbide are obtained. Silicon carbide in the highly purified cutting scraps is important as a silicon source, and silicon can be recovered from the highly purified cutting scraps.
(6) By producing silicon by heating cutting scraps containing silicon carbide, which are produced during a cutting or grinding of silicon ingots or silicon wafers, and a silica raw material, power consumption can be decreased, as compared with the case of producing silicon by reducing a silica material with a carbon material.

That is, the present invention is as follows.
1. A method for recovering silicon from cutting scraps containing silicon carbide, which are produced during a cutting or grinding of silicon ingots or silicon wafers, wherein the method comprises producing silicon by heating the cutting scraps containing silicon carbide, and a silica raw material.
2. The method for recovering silicon according the item 1 above, which comprises mixing the cutting scraps containing silicon carbide and the silica raw material to obtain a raw material mixed powder, and heating the raw material mixed powder to produce silicon.
3. The method for recovering silicon according to the item 2 above, which further comprises forming the raw material mixed powder into a briquette, and heating the briquette of raw material mixed powder to produce silicon.
4. The method for recovering silicon according to any one of the items 1 to 3 above, wherein contents of iron, aluminum, calcium and titanium in the cutting scraps containing silicon carbide each are 0.1 % by mass or less.
5. The method for recovering silicon according to any one of the items 1 to 4 above, wherein contents of boron and phosphorus in the cutting scraps containing silicon carbide each are 0.001 % by mass or less.
6. The method for recovering silicon according to any one of the items 1 to 5 above, wherein contents of iron, aluminum, calcium and titanium in the silica raw material each are 0.1% by mass or less.
7. The method for recovering silicon according to any one of the items 1 to 6 above, wherein contents of boron and phosphorus in the silica raw material each are 0.001 % by mass or less.
8. The method for recovering silicon according to any one of the items 1 to 7 above, wherein the ratio between silicon and silicon carbide in the cutting scraps containing silicon carbide is from 5:95 to 95:5 in mass ratio.
9. A method for producing silicon by recovering silicon from cutting scraps containing silicon carbide, which are produced during a cutting or grinding of silicon ingots or silicon wafers, wherein the method comprises producing silicon by heating the cutting scraps containing silicon carbide, and a silica raw material.
10. The method for producing silicon according to the item 9 above, which comprises mixing the cutting scraps containing silicon carbide and the silica raw material to obtain a raw material mixed powder, and heating the raw material mixed powder to produce silicon.
11. The method for producing silicon according to the item 10 above, which further comprises forming the raw material mixed powder into a briquette, and heating the briquette of raw material to produce silicon.
12. The method for producing silicon according to any one of the items 9 to 11 above, wherein contents of iron, aluminum, calcium and titanium in the cutting scraps containing silicon carbide each are 0.1% by mass or less.
13. The method for producing silicon according to any one of the items 9 to 12 above, wherein contents of boron and phosphorus in the cutting scraps containing silicon carbide each are 0.001 % by mass or less.
14. The method for producing silicon according to any one of the items 9 to 13 above, wherein contents of iron, aluminum, calcium and titanium in the silica raw material each are 0.1 % by mass or less.
15. The method for producing silicon according to any one of the items 9 to 14 above, wherein contents of boron and phosphorus in the silica raw material each are 0.001 % by mass or less.
16. The method for producing silicon according to any one of the items 9 to 15 above, wherein the ratio between silicon and silicon carbide in the cutting scraps containing silicon carbide is from 5:95 to 95:5 in mass ratio.

### Advantage of the Invention

According to the method for recovering silicon of the present invention, silicon can be recovered from the entire cutting scrap raw materials using cutting scraps containing silicon carbide as raw materials without separating silicon carbide and silicon from the raw materials, and silicon can easily and efficiently be recycled.

Furthermore, according to the method for producing silicon of the present invention, power consumption can be decreased as compared the case of producing silicon by reducing a silica raw material with a carbon material, and silicon can efficiently be produced.

### Brief Description of the Drawings

Figs. 1(A) and (B) are a flow chart showing each step of the method for recovering silicon of the present invention.
Fig. 2 is a view for explaining a reduction reaction of silicon dioxide in an electric arc furnace.
Fig. 3 is a view for explaining a production apparatus of silicon.
Fig. 4 is a flow chart showing one embodiment of a production method of silicon.

### Mode for Carrying Out the Invention

### <Method for recovering silicon>

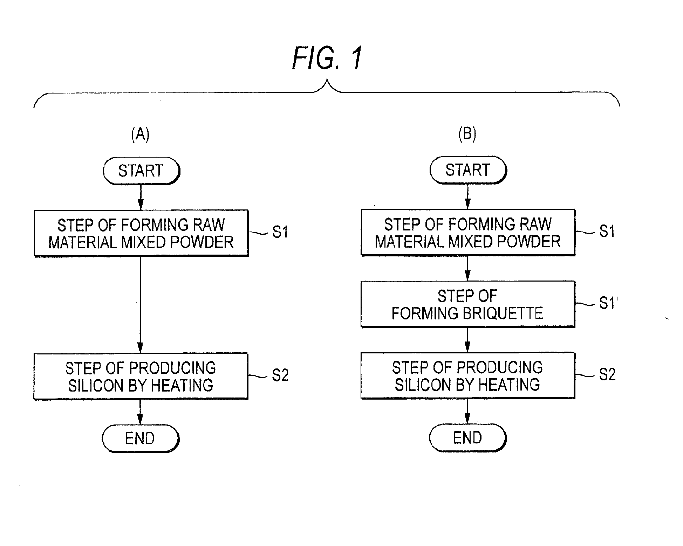

The recovery method and production method of silicon of the present invention include a step (S2) of heating cutting scraps containing silicon carbide, and a silica raw material to produce silicon, as shown in the flow chart of Fig. 1(A). Furthermore, the methods preferably include a step (S1) of mixing the cutting scraps containing silicon carbide and the silica raw material before the step (S2) to obtain a raw material mixed powder.

### [Step (S2) of producing silicon by heating cutting scraps containing silicon carbide, and silica raw material]

In the step (S2), silicon is produced by mixing cutting scraps containing silicon carbide, and a silica raw material, and heating the mixture. The term "silicon is produced by heating" is a concept including reduction of a silica raw material by silicon carbide and production of silicon by heating a silicon powder.

The term "cutting scraps containing silicon carbide" means cutting scraps produced during the cutting or grinding of silicon ingots or silicon wafers.

The term "cutting" means cutting upper and lower edges and side surface portions of ingots, cutting out a rectangular column having vertical and horizontal sizes of a wafer from ingots, and slicing a wafer from rectangular or columnar ingots. Wire war, blade saw or the like is used in the cutting.

The term "grinding" means grinding side surfaces of ingots, and grinding a front surface or a back surface of wafers.

The cutting scraps containing silicon carbide, produced during the cutting or grinding silicon ingots or silicon wafers (hereinafter sometimes simply referred to as "cutting scraps") sometimes contain high purity silicon powder and silicon carbide powder, and silicon has been required to recycle from the cutting scraps.

The cutting scraps sometimes contain contaminants such as iron, and are sometimes subjected to purification treatment. In the case of conducting purification treatment, relative concentration of silicon in the cutting scraps to silicon carbide is decreased.

The ratio between silicon and silicon carbide in the cutting scraps used in the present invention is preferably from 5:95 to 95:5 (silicon : silicon carbide), further preferably from 10:90 to 95:5 (silicon : silicon carbide), and particularly preferably from 20:80 to 95:5 (silicon : silicon carbide), in mass ratio. In the ratio between silicon and silicon carbide in the cutting scraps of from 5:95 and 95:5 (silicon : silicon carbide) in mass ratio, silicon can efficiently be produced with increasing the content of silicon.

The content of the silicon in the cutting scraps is preferably 40% by mass or more, more preferably 60% by mass or more, and further preferably 80% by mass or more.

By containing silicon in an amount of 5% by mass or more in the cutting scraps, the silicon powder in the cutting scraps is simply melted by merely applying heat, and reacted with a silica raw material. For example, heat for proceeding reduction reaction as in other raw materials such as quartz and carbon is not necessary. Therefore, power consumption is reduced.

The content of silicon carbide in the cutting scraps is preferably 60% by mass or less, and more preferably 40% by mass or less. Silicon can efficiently be produced with decreasing the content of silicon carbide in the cutting scraps, such as 60% by mass or less. In general, the content of silicon carbide is preferably 50% by mass or less.

The contents of silicon and silicon carbide in the cutting scraps can be measured by the conventional methods, and can be measured with, for example, an infrared absorption method after combustion.

Examples of the impurities contained in the cutting scraps include iron, aluminum, calcium and titanium.

Contents of iron, aluminum, calcium and titanium (hereinafter referred to as "major metal impurities") in the cutting scraps each are preferably 0.1% by mass (1,000 mass ppm) or less, more preferably 0.01% by mass or less, and further preferably 0.001 % by mass or less.

Furthermore, the total content of iron, aluminum, calcium and titanium in the cutting scraps is preferably 0.1 % by mass or less, more preferably 0.01 % by mass or less, and further preferably 0.002% by mass or less.

When the contents of the major metal impurities in the cutting scraps fall within the above ranges, purity of crude silicon obtained by reduction can be increased, and load in removal of impurities in a purification step can be suppressed. Furthermore, the yield of high purity silicon can be improved.

The contents of the major metal impurities in the cutting scraps are preferred as smaller contents, and are not particularly limited. However, the lower limit is generally 0.0001 % by mass or more, and in some cases, 0.0002% by mass or more.

The contents of boron and phosphorus in the cutting scraps are not particularly limited. Generally, each content is preferably 10 mass ppm (0.001 % by mass) or less, more preferably 5 mass ppm or less, further preferably 1 mass ppm or less, particularly preferably 0.5 mass ppm or less, and most preferably 0.1 mass ppm or less.

When the contents of boron and phosphorus in the cutting scraps fall within the above ranges, purity of crude silicon obtained by reduction can be increased, and load in removal of impurities in a purification step can be suppressed. Furthermore, the yield of high purity silicon can be improved.

The contents of the boron and phosphorus in the cutting scraps are preferred as smaller contents, and are not particularly limited. However, the lower limit is generally 0.001 % by mass or more, and in some cases, 0.01 % by mass or more.

The silica raw material used in the present invention can use any material so long as the material comprises SiO₂ as a main component. Examples of the silica raw material include powdery materials such as quartz powder (silica sand) and quartz bulk. The silica raw material is preferably high purity silica raw material containing lesser impurities.

Examples of impurities generally contained in the silica raw material include iron, aluminum, calcium and titanium, although varying depending on the kind of a silica raw material.

The silica raw material used in the present invention is that the contents of iron, aluminum, calcium and titanium each are preferably 0.1% by mass (1,000 mass ppm) or less, more preferably 0.01 % by mass or less, and further preferably 0.001 % by mass or less.

Furthermore, the total content of iron, aluminum, calcium and titanium in the silica raw material is preferably 0.1 % by mass or less, more preferably 0.01% by mass or less, and further preferably 0.002% by mass or less.

When the contents of the major metal impurities in the silica raw material fall within the above ranges, purity of crude silicon obtained by reduction can be increased, and load in removal of impurities in a purification step can be suppressed. Furthermore, the yield of high purity silicon can be improved.

The contents of the major metal impurities in the silica raw material are preferred as smaller contents, and are not particularly limited. The lower limit is generally 0.0001% by mass or more, and in some cases, 0.0002% by mass or more, from the standpoints of difficulty in availability and costs.

The contents of boron and phosphorus in the silica raw material used in the present invention are not particularly limited. Generally, each content is preferably 10 mass ppm (0.001% by mass) or less, more preferably 5 mass ppm or less, further preferably 1 mass ppm or less, particularly preferably 0.5 mass ppm or less, and most preferably 0.1 mass ppm or less.

When the contents of boron and phosphorus in the silica raw material fall within the above ranges, purity of crude silicon obtained by reduction can be increased, and load in removal of impurities in a purification step can be suppressed. Furthermore, the yield of high purity silicon can be improved.

The contents of the boron and phosphorus in the silica raw material are preferred as smaller contents, and are not particularly limited. However, the each content is generally 0.001% by mass or more, and in some cases, 0.01% by mass or more.

Mixing ratio between silica carbide and silica raw material in the cutting scraps is that silicon carbide/silica raw material (mass ratio) in the cutting scraps is preferably 0.67 or more and 1.33 or less, and more preferably 0.93 or more and 1.27 or less.

Examples of the heating method include arc heating, induction heating, resistance heating, plasma heating and electron beam heating. Above all, the arc heating is advantageous industrial facility costs and running costs, and is therefore preferred.

Generally, the heating temperature is preferably from 2,000 to 3,000°C in the arc heating, and preferably from 1,800 to 2,500°C in other heating methods.

The heating time at the maximum temperature is preferably from 0.5 to 10 hours in the case of a batch treatment.

### [Step (S1) of forming raw material mixed powder]

The method for recovering silicon and the method for producing silicon, of the present invention include a step (S1) of mixing cutting scraps containing silicon carbide, and a silica raw material to form a raw material mixed powder as shown in Fig. 1(A), and the raw material mixed powder is preferably heated. By previously mixing the cutting scraps containing silicon carbide and the silica raw material to form the raw material mixed powder, segregation in the furnace can be suppressed (compositional distribution of materials having different grain size or density is prevented from scattering).

### [Step (S1') of forming raw material mixed powder into briquette]

In the case of including the step (1) of mixing the cutting scraps containing silicon carbide, and the silica raw material to form the raw material mixed powder in the method for recovering silicon and the method for producing silicon, of the present invention, it is preferred that the raw material mixed powder prepared in the step (S1) is formed into a briquette (formed into a solid) in the step (S1'), and the briquette of raw material mixed powder is heated in the step (S2) as shown in Fig. 1 (B).

In the case of using an electric arc furnace as a furnace for silicon production, SiO gas, CO gas and the like generated at a portion at which arc of an electrode tip is released are sprayed toward an upper part of the furnace. Therefore, where powdery raw materials are introduced, the powder may ride on those gases to elect outside the furnace, and may clog the chimney. Therefore, from the standpoint of handling properties of raw materials, particularly in the case of using an electric arc furnace, it is preferred to proceed to the step (S2) after passing through the step (S1') of forming the raw material mixed powder into a briquette.

The method for forming a briquette is not particularly limited. Pressure may merely be applied to a raw material mixed powder of cutting scraps containing silicon carbide and a silica raw material, or a binder may be added to the raw material mixed powder and pressure is then applied.

The binder is preferably a resin having high hot strength that carbonizes by heating, and examples thereof include a phenol resin and polyvinyl alcohol.

### <Method for recovering silicon and method for producing silicon>

According to the method for recovering silicon and the method for producing silicon, that include the step (S2) of producing silicon by heating the cutting scraps containing silicon carbide, and the silica raw material, high purity silicon can be obtained. Contents of major metal impurities in the silicon obtained in the present invention each are preferably 0.5% by mass (5,000 mass ppm) or less, more preferably 0.1% by mass or less, further preferably 0.01 % by mass or less, and particularly preferably 0.001% by mass or less.

The total content of iron, aluminum, calcium and titanium in the silicon obtained by the method for recovering silicon and the method for producing silicon, of the present invention is preferably 0.5% by mass or less, more preferably 0.1% by mass or less, further preferably 0.01 % by mass or less, and particularly preferably 0.002% by mass or less.

The contents of the major metal impurities are preferred as smaller contents, and the lower limit is not particularly limited. However, from the standpoint that unavoidable impurities are present, the lower limit is generally 0.00001% by mass (0.1 mass ppm) or more, and in some cases, 0.00002% by mass (0.2 mass ppm) or more.

The contents of boron and phosphorus in the silicon obtained by the method for recovering silicon and the method for producing silicon, of the present invention are not particularly limited. However, generally the contents each are preferably 10 mass ppm (0.001% by mass) or less, more preferably 5 mass ppm or less, further preferably 1 mass ppm or less, particularly preferably 0.5 mass ppm, and most preferably 0.1 mass ppm or less.

The contents of boron and phosphorus obtained by the method for recovering silicon and the method for producing silicon, of the present invention are preferred as smaller contents, and the lower limit is not particularly limited. However, the lower limit is generally 0.001 mass ppm or more, and in some cases, 0.01 mass ppm or more.

The method for recovering silicon and the method for producing silicon, of the present invention are described in detail below by reference to the drawings, but the description is one embodiment of the present invention, and the present invention is not restricted to the following contents so long as it does not exceed the gist of the present invention.

First, a chemical reaction caused in an electric arc furnace in the case of conducting a reduction reaction using cutting scraps containing silicon carbide, and a silica raw material, and as necessary, a carbon material, as raw materials for silicon production is described.

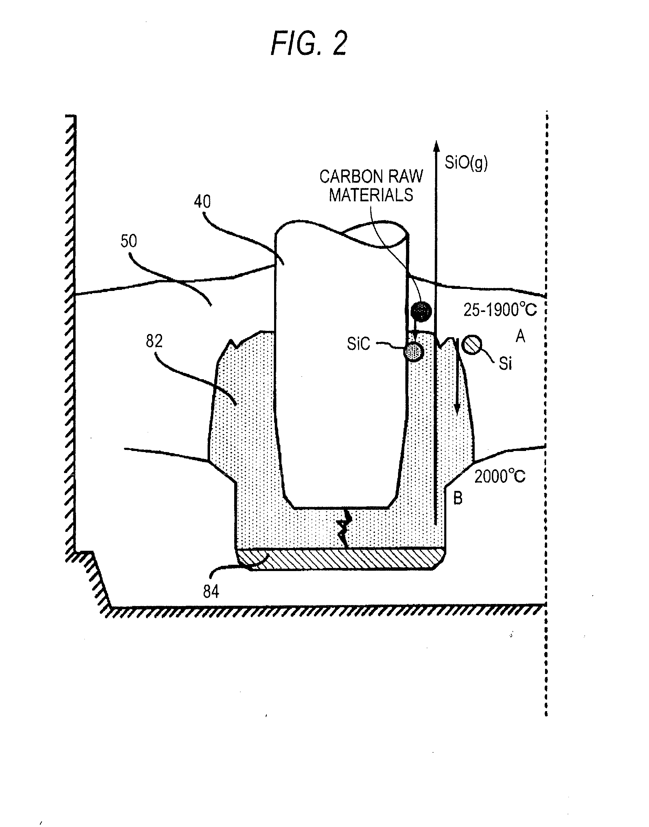

Fig. 2 is a view for explaining a reduction reaction of silicon dioxide in an electric arc furnace, and is a view noted to a tip portion of one electrode. In Fig. 2, details of an electric arc furnace, such as lining and refractory layer are omitted.

As shown in Fig. 2, a tip of an electrode 40 is inserted in a raw material mixed powder containing a silica raw material and silicon carbide in the inside of the electric arc furnace. That is, in the method for producing silicon according to one embodiment of the present invention, a so-called submerged arc system is employed.

During operation of the electric arc furnace, a layer 82 having SiO and CO mixed therein is present in the vicinity of the tip of the electrode 40 in raw materials 50, and Si obtained as a result of a reduction reaction in the furnace forms a liquid layer 84 and collects in a lower part of the layer 82.

In the electric arc furnace, an upper low temperature region is present in the vicinity shown by A in Fig. 2, and a lower high temperature region is present in the vicinity shown by B in Fig. 2, and it is considered that preferentially different reactions occur in the respective regions.

That is, it is considered that reactions represented by the following reaction formula (1) or (2) preferentially occurs in the upper low temperature region A. However, in the case that only cutting scraps and a silica raw material are used and a carbon material is not used, the reaction of the reaction formula (1) is limited to a supply amount of carbon from a graphite electrode and graphite lining.

SiO (g) + 2C → SiC + CO (g) (1)

2SiO (g) → Si + SiO₂ (2)

It is considered that of the reactions represented by the reaction formulae (1) and (2), particularly the reaction according the reaction formula (1) most preferentially occurs, and SiC is chiefly formed in the upper low temperature region A.

On the other hand, it is considered that the reactions represented by the following reaction formulae (3) to (5) preferentially occur in the lower high temperature region B. However, in the case that only cutting scraps and a silica raw material are used and a carbon material is not used, the reaction of the reaction formula (3) is limited to a supply amount of carbon from a graphite electrode and graphite lining.

SiO₂ + C → SiO (g) + CO (g) (3)

SiO (g) + SiC → 2Si + CO (g) (4)

SiO₂ + SiC → Si + SiO (g) + CO (g) (5)

It is considered that of the above reaction formulae (3) to (5), particularly the reaction according to the reaction formula (4) most preferentially occurs. For example, silicon is formed by the reaction between silicon carbide formed in the upper lower temperature region A and gaseous silicon oxide.

Summarizing the above reaction formulae, in the carbon reduction reaction of the silica raw material, silicon is formed by the reaction according to the following reaction formula (6).

SiO₂ + 2C → Si + 2CO (g) (6)

On the other hand, in the case that only a mixed powder of cutting scraps and a silica raw material is used and a carbon material is not used, formation of silicon from silicon carbide in the mixed powder occurs by the reaction according to the following reaction formula (7) that summarizes the reactions represented by the reaction formulae (4) and (5).

SiO₂ + 2SiC → 3Si + 2CO (g) (7)

In the case of using cutting scraps containing silicon carbide and a silica raw material, silicon is taken out of SiC by the reaction (4) or (5). As compared with reduction of general silica raw material and carbon material, at least the reaction (1) is not present, and a silicon powder does not almost involve absorption of heat. This is advantageous in consumption energy and yield.

Production apparatus of the silicon is described below, and a method for producing silicon using the production method is then described below.

### <Production apparatus 200 of silicon>

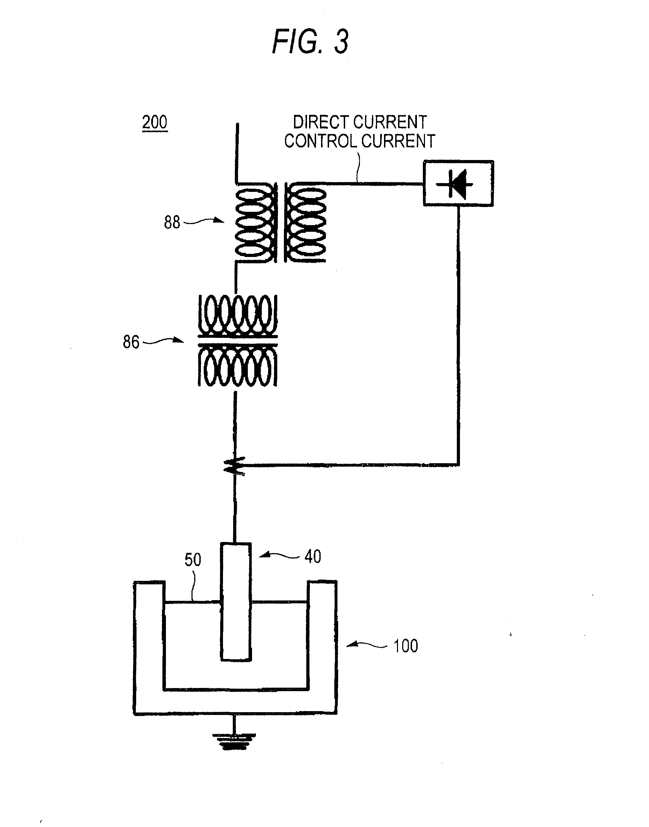

Fig. 3 is a schematic view for explaining a production apparatus 200 of silicon. As shown in Fig. 3, the silicon production apparatus 200 comprises an electric arc furnace 100 equipped with an electrode 40 therein, a power regulator 88 for stabilizing electric current flowing through the electrode in the electric arc furnace 100, and a transformer 86 provided between the electrode 40 and the power regulator 88.

Cutting scraps containing silicon carbide and a silica raw material are packed as raw materials 50 for silicon production in the electric arc furnace 100, and a tip of the electrode 40 is embedded in the raw materials. The electrode 40, the power regulator 88 and the transformer 86 are electrically connected. Wirings and the like are omitted in Fig. 3.

### (Electric arc furnace 100)

The electric arc furnace 100 preferably has an inner diameter of 700 mm or more and 7,000 mm or less.
At least one electrode 40 is provided in the electric arc furnace 100, and the tip of the electrode is embedded the raw materials 50. Thus, a so-called submerged arc system is formed.

### (Transformer 86)

The transformer 86 is provided in the production apparatus 200 according to the present invention. The transformer 86 is connected between the power regulator 88 and the electric arc furnace 100, and functions as a furnace transformer. The transformer 86 can use the conventional transformer without particular limitation, but a transformer having large allowable current is preferably used.

Specifically, a transformer having allowable current of from 1,100A (100 kW operating furnace) to 105,000A (20,000 kW operating furnace) is preferably used. Particularly, transformation is preferably conducted by the transformer 86 having the capacity 1.5 times or more of operating power of the electric arc furnace 100.

That is, when the operating power is P (kW), the capacity of the transformer is preferably 1.5P (kVA) or more, more preferably 2P (kVA) or more, and further preferably 3P (kVA) or more. By this, even in the case that a certain degree of large current has flown in the transformer 86, the transformer 86 does not stop, and continuous operation can be performed without stopping the entire production apparatus 200.

A connecting method of the transformer 86, the power regulator 88 and the electrode 40 is not particularly limited so long as it is appropriately transformable form in the production apparatus 200. For example, the same form as is used in an open electric arc furnace can be employed.

The production apparatus 200 further comprises a condenser, a balancer, a distribution board and a power-supply transformer, other than the above constitutions, and electric conduction to the electric arc furnace 100 is possible. Other forms are not particularly limited, and the same form as in the conventional form can be applied.

### <Specific example of production method of silicon>

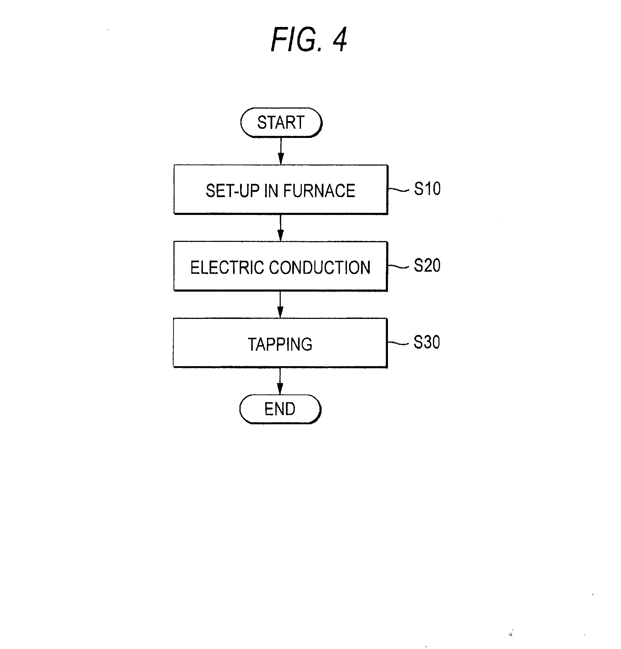

Specific example of the production method of silicon using the production apparatus 200 is described below. As each step of the specific example is shown in Fig. 4, the specific example of the production method of silicon has each step of set-up in furnace (step S10), electric conduction (step S20) and tapping (step S30), and conducts chipping work and the like in the furnace after stopping operation of the furnace.

### (Step S 10)

Step S10 is a step of attaching the electrode 40 to the electric arc furnace 100, introducing raw materials in the furnace to fill with raw materials 50, and setting up the furnace to a state that silicon can be produced. The raw material mixed powder or the briquette of raw material mixed powder is used as the raw materials 50. The electrode tip of the electrode 40 is embedded in the raw materials 50, and a so-called submerged arc system is preferably formed.

### (Step S20)

Step S20 is a step of flowing electricity in the electric arc furnace 100 after completion of the set-up of the inside of the furnace and heating the inside of the furnace by arc discharge. Temperature in the furnace heated by arc discharge is not limited, and may be left to the arc discharge. In this case, the amount of current flowing in the electric arc furnace 100 is adjusted and stabilized by the power regulator 88 provided outside the electric arc furnace 100. By this, the reaction inside the raw materials 50 proceeds, and even in the state that silicon carbide accumulated in the furnace and the electrode 40 are contacted with each other to possibly cause short circuit, violent current swing occurred in the electrode 40 and other apparatuses (hereinafter referred to as "current hunting") is suppressed, and the operation can continuously be conducted without stopping the production apparatus 200.

On the other hand, in the step S20, the electric arc furnace is operated while setting the hearth power density PD (W/cm²) of the electric arc furnace 100 at 90 W/cm² or more. By this, high purity silicon can efficiently be produced, and the furnace can continuously be operated while suppressing formation of silicon carbide in the furnace without stopping the production apparatus 200.

### (Step S30)

The silicon formed by carbon reduction in the electric arc furnace 100 gradually collects on the furnace bottom in a liquid state. The step S30 is a step of flowing out the liquid silicon from a tap hole provided on the side surface of the furnace bottom and taking out the same. By taking the silicon out of the tap hole, the raw materials 50 in the furnace are gradually decreased. In the present invention, fresh cutting scraps containing silicon carbide and silica material, or briquette raw materials thereof are introduced in the furnace from the upper part thereof in accordance with the decreased amount of the raw materials 50, and the carbon reduction reaction is continuously conducted, as described above.

Thus, the silicon is taken out of the raw materials for silicon production by the carbon reduction reaction through the steps S10 to S30. The silicon may be taken out in a form of liquid, and may be cooled and then taken out as a solid. The silicon is generally taken out as a solid. In the case of stopping the production of silicon, chipping work is thereafter conducted in the furnace.

The method for producing silicon described above is a method for producing high purity silicon by the carbon reduction reaction using high purity raw materials, and is a method that eliminates the problem such as short circuit by the use of high purity raw materials, and can continuously produce silicon.

### Examples

### (Reference Example 1)

Mixed powder of a silica powder and silicon carbide abrasive grains was heated at 2,000°C for 2 hours in an argon atmosphere in an induction heating furnace. Charge composition and composition after heating are shown in Tables 1 and 2. As shown in Tables 1 and 2, the amounts of the silica powder and the silicon carbide powder were decreased, and silicon was formed.

### (Reference Example 2)

Mixed powder of a silica powder and a silicon carbide powder was heated in the same manner as in Example 1. Charge composition and composition after heating are shown in Tables 1 and 2. As shown in Tables 1 and 2, the amounts of the silica powder and the silicon carbide powder were decreased, and silicon was formed.

### (Reference Example 3)

Silica power was mixed with a cutting powder of silicon, containing a silica powder and silicon carbide abrasive grains to form a mixed powder, and the mixed powder was heated. The heating was conducted in the same manner as in Example 1. Composition of the mixed powder and composition of the product after heating are shown in Tables 1 and 2.

As shown in Tables 1 and 2, the amounts of the silica powder and the silicon carbide powder were decreased, and the amount of silicon was decreased. The decreased amount of silicon is due to volatilization of SiO formed by the reaction between silica and silicon.

From the fact that the amount of silicon carbide was decreased, it was seen that the reaction of Si + SiO₂ → 2SiO + CO occurs, and formation of SiO that is important for silicon formation as shown in the formula (5) above occurs.

Therefore, it is considered that if experiment has been conducted under the conditions that volatilization of SiO is suppressed as in Example 1 described below, silicon would be formed from SiC and the amount of silicon would be increased.

### (Example 1)

Silicon carbide abrasive grains and a silica powder were mixed to form a mixed powder, and the mixed powder was formed into a briquette. The briquette was introduced in an electric arc furnace, and heated for 8 hours to produce silicon. Composition of the mixed powder and composition of tapped silicon are shown in Tables 1 and 2.

Furthermore, amounts of impurities in a silica powder, a purified silicon cutting powder (silicon carbide powder), and silicon formed are shown in Table 3.

### (Example 2)

Material obtained by purifying a silicon cutting powder containing silicon carbide abrasive grains, and a silica bulk were introduced in an electric arc furnace over about 30 hours to produce silicon. The silicon cutting powder containing silicon carbide abrasive grains was a silicon cutting powder containing silicon carbide, obtained by washing cutting scraps obtained by separating a cutting liquid, with an acid. Composition of the raw materials introduced and composition of tapped silicon are shown in Tables 1 and 2. Furthermore, amounts of impurities in the raw materials introduced and silicon formed are shown in Table 3.

**[Table 1]**

| | | | Raw materials | | | |
|---|---|---|---|---|---|---|
| | Heating method | | Silica (g) | Silicon carbide (g) | Silicon (g) | Total (g) |
| Reference Example 1 | Induction heating | Charge | 18.0 | 12.0 | 0.0 | 30.0 |
| Reference Example 2 | Induction heating | Charge | 16.4 | 13.7 | 0.0 | 30.1 |
| Reference Example 3 | Induction heating | Charge | 6.7 | 3.4 | 9.3 | 19.4 |

| | | | Silica (kg) | Silicon carbide (kg) | Silicon (kg) | Total (kg) |
|---|---|---|---|---|---|---|
| Example 1 | Arc heating | Charge | 25.0 | 25.0 | 0.0 | 50.0 |
| Example 2 | Arc heating | Charge | 180.9 | 149.2 | 156.8 | 486.9 |

**[Table 2]**

| | | Product | | | |
|---|---|---|---|---|---|
| | | Silica (g) | Silicon carbide (g) | Silicon (g) | Total (g) |
| Reference Example 1 | After heating | 0.3 | 2.3 | 4.3 | 6. 9 |
| Reference Example 2 | After heating | 0.3 | 4.0 | 4.8 | 9.1 |
| Reference Example 3 | After heating | 0.3 | 1.3 | 7.8 | 9.4 |

| | | Silica (kg) | Silicon carbide (kg) | Silicon (kg) | Total (kg) |
|---|---|---|---|---|---|
| Example 1 | Tapping | - | 0.03 | 16.2 | 16.2 |
| Example 2 | Tapping | - | 0.18 | 248.5 | 248.7 |

**[Table 3]**

| (Unit: ppmw) | | | | | | | | | |
|---|---|---|---|---|---|---|---|---|---|
| | | | B | P | Fe | Al | Ti | Ca | Mg |
| Example 1 | Raw material | Silica powder | 0.4 | 1.4 | 100 | 21 | 0.6 | 4.4 | 1.8 |
| | | Silicon carbide powder | 5 | <5 | 27 | 96 | 15 | <5 | <2 |
| | Product | Silicon produced | 2.2 | 4.8 | 390 | 3500 | 10 | 4.8 | 0.2 |
| Example 2 | Raw material | Silica bulk | <0.1 | <0.1 | 3.5 | 11 | 1.6 | 0.8 | <0.1 |
| | | Silicon carbide powder | 6 | <5 | 190 | 63 | 41 | 6 | <2 |
| | | Silicon powder | <0.1 | 0.3 | 57 | 40 | 7.7 | 16 | 0.7 |
| | Product | Silicon produced | 2.3 | 0.9 | 120 | 70 | 21 | 16 | 0.1 |

As shown in Table 2, according to Example 1, the silicon carbide content in the silicon obtained was about 0.2% by mass. Furthermore, according to Example 2, the silicon carbide content in the silicon obtained was 0.07%.

If the silicon carbide content in the silicon obtained can be reduced to about 0.2% by mass as in Example 1, the silicon carbide content in the silicon obtained can further be reduced to 0.05% by mass or less by conducting sedimentation separation in a tapped receiving vessel.

In Examples 1 and 2, the silicon carbide contained in the silicon obtained is mainly silicon carbide precipitated as SiC by that solubility of carbon melted in silicon at high temperature in the furnace is decreased by the decrease in a liquid temperature of silicon. Even in the case of producing silicon by ordinary silica and carbon material, the same SiC amount is detected in the silicon obtained. Therefore, in Examples 1 and 2, silicon carbide contained in the silicon obtained is not mainly silicon carbide that is residual silicon carbide powder of the raw material.

Furthermore, as shown in Table 3, it was seen that high purity silicon is obtained by producing the silicon from raw materials having low contents of major metal impurities, boron and phosphorus.

The present invention has been described above by reference to the embodiment that seems to be most practical and preferred at this time. However, the present invention is not limited to the embodiment disclosed in the present description, modifications can appropriately be made in a scope that is not contrary to the gist or concept of the invention readable from the claims and the entire description, and the method for producing silicon and the method for recovering silicon, accompanying the modifications should be understood to be included in the technical scope of the present invention.

Although the present invention has been described in detail and by reference to the specific embodiments, it is apparent to one skilled in the art that various modifications or changes can be made without departing the spirit and scope of the present invention. This application is based on Japanese Patent Application No. 2010-054741 filed March 11, 2010, the disclosure of which is incorporated herein by reference in its entity.

### Industrial Applicability

According to the method for recovering silicon and the method for producing silicon, of the present invention, high purity silicon can be recovered from cutting scraps produced during the cutting or grinding of silicon ingots or silicon wafers, and the high purity can be used as a material for solar cells.

### Description of Reference Numerals and Signs

- S1: Step of forming raw material mixed powder
- S1': Step of forming briquette
- S2: Step of producing silicon by heating

## Claims

1. A method for recovering silicon from cutting scraps containing silicon carbide, which are produced during a cutting or grinding of silicon ingots or silicon wafers, wherein the method comprises producing silicon by heating the cutting scraps containing silicon carbide, and a silica raw material.

2. The method for recovering silicon according claim 1, which comprises mixing the cutting scraps containing silicon carbide and the silica raw material to obtain a raw material mixed powder, and heating the raw material mixed powder to produce silicon.

3. The method for recovering silicon according to claim 2, which further comprises forming the raw material mixed powder into a briquette, and heating the briquette of raw material mixed powder to produce silicon.

4. The method for recovering silicon according to any one of claims 1 to 3, wherein contents of iron, aluminum, calcium and titanium in the cutting scraps containing silicon carbide each are 0.1 % by mass or less.

5. The method for recovering silicon according to any one of claims 1 to 4, wherein contents of boron and phosphorus in the cutting scraps containing silicon carbide each are 0.001 % by mass or less.

6. The method for recovering silicon according to any one of claims 1 to 5, wherein contents of iron, aluminum, calcium and titanium in the silica raw material each are 0.1 % by mass or less.

7. The method for recovering silicon according to any one of claims 1 to 6, wherein contents of boron and phosphorus in the silica raw material each are 0.001% by mass or less.

8. The method for recovering silicon according to any one of claims 1 to 7, wherein the ratio between silicon and silicon carbide in the cutting scraps containing silicon carbide is from 5:95 to 95:5 in mass ratio.

9. A method for producing silicon by recovering silicon from cutting scraps containing silicon carbide, which are produced during a cutting or grinding of silicon ingots or silicon wafers, wherein the method comprises producing silicon by heating the cutting scraps containing silicon carbide, and a silica raw material.

10. The method for producing silicon according to claim 9, which comprises mixing the cutting scraps containing silicon carbide and the silica raw material to obtain a raw material mixed powder, and heating the raw material mixed powder to produce silicon.

11. The method for producing silicon according to claim 10, which further comprises forming the raw material mixed powder into a briquette, and heating the briquette of raw material to produce silicon.

12. The method for producing silicon according to any one of claims 9 to 11, wherein contents of iron, aluminum, calcium and titanium in the cutting scraps containing silicon carbide each are 0.1 % by mass or less.

13. The method for producing silicon according to any one of claims 9 to 12, wherein contents of boron and phosphorus in the cutting scraps containing silicon carbide each are 0.001 % by mass or less.

14. The method for producing silicon according to any one of claims 9 to 13, wherein contents of iron, aluminum, calcium and titanium in the silica raw material each are 0.1 % by mass or less.

15. The method for producing silicon according to any one of claims 9 to 14, wherein contents of boron and phosphorus in the silica raw material each are 0.001 % by mass or less.

16. The method for producing silicon according to any one of claims 9 to 15, wherein the ratio between silicon and silicon carbide in the cutting scraps containing silicon carbide is from 5:95 to 95:5 in mass ratio.
